## Europäisches Patentamt
## European Patent Office
## Office européen des brevets

(11) Publication number: **0 075 631**
**B1**

(12) **EUROPEAN PATENT SPECIFICATION**

(45) Date of publication of patent specification: **13.11.85**

(51) Int. Cl.⁴: **G 06 F 11/22, G 06 F 11/10**

(21) Application number: **81304518.4**

(22) Date of filing: **30.09.81**

(54) Apparatus for logging hard memory read errors.

(43) Date of publication of application:
**06.04.83 Bulletin 83/14**

(45) Publication of the grant of the patent:
**13.11.85 Bulletin 85/46**

(84) Designated Contracting States:
**BE DE FR GB IT NL**

(56) References cited:
**EP-A-0 032 957**
**US-A-4 174 537**
**US-A-4 209 846**
**US-A-4 255 808**

(73) Proprietor: **BURROUGHS CORPORATION (a Michigan corporation)**
**Burroughs Place**
**Detroit, Michigan 48232 (US)**

(72) Inventor: **Dong Sung, Robert Kim**
**24872 Grissom Road**
**Lugana Hills California 92653 (US)**

(74) Representative: **Kirby, Harold Douglas Benson et al**
**G.F. Redfern & Company Marlborough Lodge 14 Farncombe Road**
**Worthing West Sussex BN11 2BT (GB)**

Courier Press, Leamington Spa, England.

## Description

Introduction

The present invention relates to an improved apparatus for use in detecting, correcting and logging errors occurring in a digital data processing system. More particularly, the present invention relates to an apparatus for logging hard memory read errors.

Background of the invention

In recent years increasing attention has been given to means and methods for detecting, correcting and logging errors occurring during digital data processing operations. In providing such capabilities, it is important to provide appropriate balances between the advantages to be gained therefrom and the cost, complexity and performance impact resulting from the additional hardware, firmware, and/or software required.

Accordingly, it becomes of considerable importance to choose an implementation for detecting, correcting and logging errors which permits appropriate advantage to be derived therefrom without unduly impacting on system cost, complexity or performance.

US—A—4,255,808 discloses a data processing memory system wherein a series of stored data words consisting in data and error checking bits is stored in a corresponding series of addressable data storage locations. An error checking circuit receives retrieved data words and provides indication if a single bit data error has occurred. The error checking and correcting circuit re-writes corrected data into the particular memory location wherefrom incorrect data was received and further stores indication of a single bit error having occurred in an extra bit location in the particular memory storage location wherefrom data bearing a single bit error was read. If no single bit error is detected, the additional bit is reset to zero. If the error checking and correcting circuit detects a single bit error in data retrieved from a memory location when there is already stored in that memory location an indication that a single bit data reading error was found on the last instance of access, then indication is provided that the particular memory storage location last accessed had a dual error for that fact to be logged in a continuous error log for the memory. The present invention seeks to improve thereover by providing that only hardware related errors where the same bit in a particular addressed word is in error on more than one consecutive occasions are logged as opposed to US Patent 4,255,808 where logging takes place whenever a memory location for storing a plurality of bits shows any kind of single bit error on two consecutive occasions, the single bit errors so logged being most probably transient errors. The present invention yet further seeks to improve over the disclosure of United States Patent 4,255,808 by avoiding the waste of memory space caused by the storage of the additional binary digit in United States Patent 4,255,808 to indicate if a single bit data error was observed on the last occasion of data retrieval from each memory location.

European Patent Application EP—A—0032957 discloses a data processing memory system wherein, in the event of an error detection and correction unit detecting a data error in data retrieved from any particular memory location, the single bit data error is corrected and rewritten into the same memory location, a control unit thereafter re-accessing the memory location to test whether the same error is once again present. A soft error is detected and no alternate arrangements made if the previously-detected error disappears on re-reading. If the same error is detected, it is recognised as a hard error and a new storage location for the binary digit position in question is selected for the hard error bit. The control unit further seeks adjacent memory locations in the memory to detect if a burst error has occurred in consequence of the neighbouring locations containing the same error. A hard error is deemed to have occurred when a store storing the last two occurring error syndromes and addresses whereat those syndromes occurred is detected by a comparator as storing two identical syndrome/address combinations. The present invention seeks to improve thereover by providing for the detection of a high proportion of hard errors in a memory without the waste of memory time caused by the necessity of re-accessing a memory location whereat a single bit error has occurred to determine whether or not the same single bit error has re-occurred. Further, the present invention seeks to detect and log hard errors in a memory system without the necessity for a patrol routine disclosed in European Application 0032957 wherein a control unit actually prevents the main data processing system from gaining access to the memory so that it can rove through the memory seeking faulty locations.

United States Patent 4,174,537 shows a data processing memory having an error detection and correction capability. Error checking bits are stored along with data in a stack memory. As data is withdrawn from each memory location it is checked for data errors and any correctable errors are corrected for use by the data processing system. Errors are also logged. Error log circuitry provides a store wherein the highest priority error since last accessing of the error log circuitry is stored. Single and multiple bit errors are detected. Multiple bit errors are given higher priority than single bit errors. The error log circuitry, if no error has occurred since the last reference thereto, will store indication of a single bit error together with the address of the storage location whereat the error occurred. If, however, a multiple bit error subsequently takes place before the error log circuitry has been cleared, indication of the multiple bit error and the address whereat it occurred is stored in place of the indication of the previously-stored single bit error. Indication is provided that more than one error has occurred.

The stored error is read out to an error logging device or a display whenever that logging device or display chooses to access the error log circuitry. The present invention seeks to improve over the disclosure of United States Patent 4,174,537 by providing means whereby single bit errors may be differentiated into hard errors and soft errors only for the hard errors to be logged without interruption to the operation of the data processing system in any way thereby to provide indication only of those memory storage locations whereat a hard fault exists.

United States Patent 4,209,846 discloses a very large scale random access memory having automatic hard error detection. The main memory is divided into groups of data words. Each data word contains error correcting bits capable of producing an error syndrome indicative of a single bit error and capable of providing correction for that single bit error. There is also provided an error logging store wherein at an address indicative of the group currently accessed by the memory indication and a running tally of each single bit error is maintained. If the same single bit error occurs in a group of data words more than three times without there being an intervening detected error in any other memory location in that group during normal operation of the data processor then the presence of a hard error in that group of data words is indicated. If a further single bit error other than that for which the hard error has been flagged is later detected an interrupt to the main system is generated since the dual bit error cannot then be corrected. The present invention seeks to provide an improvement thereover by providing for hard error detection without the necessity for such a separate bit error logging store. In US Patent 4,209,846 a large error store is provided and comparison effected between error syndromes each time an error is detected in a particular group of words. By comparison the present application dispenses with the necessity for the logging of every single error, relying instead upon the chance of consecutive error syndromes being the same and for the same memory location. Further, the present invention seeks to provide improvement by arranging that a particular memory location is known to be at fault rather than a group of words. Thus, the matter of the present application allows for a more accurate pinpointing of a fault location in a memory for repair without the necessity for taking off-line large pieces of the memory for further external testing.

Summary of the present invention

Accordingly, the invention solves the problems of how to design an apparatus for providing data storage for a data processor with an error logging mechanism for hard errors which avoids the waste of memory space and time.

The present invention as claimed consists in an apparatus for providing data storage for a data processor, said apparatus comprising; a plurality of memory locations each selectably operable in response to the receipt of a respective address to store or retrieve a data word consisting in retrievable data together with a plurality of error checking digits; error detection and correction apparatus operable to receive and monitor a retrieved data word from a selected memory location to detect and correct any single-bit errors in said retrieved data word, to present the corrected retrieved data word back to said selected memory location for re-storage therein, to generate an error syndrome indicative of the nature of any error in said retrieved data word, and to provide said retrievable data from said corrected retrieved data word for use by said data processor; an error register operable to store said error syndrome and said address for the last of said plurality of memory locations whereat said error detection and correction apparatus has detected an error; a comparator operable to monitor said syndrome and said address in said error register and to provide output indicative of a hard error in the event of a match therebetween; and an error logging mechanism operable in response to the receipt of said output from said comparator to log said error syndrome and said address in said error register, said apparatus being characterised in that the error logging mechanism is designed in such a way that only addresses and error syndromes of those memory locations are logged into a logging memory which were addressed twice consecutively for data retrieval and resulted in a detected error without there being an intervening detected error in any other memory location in the normal operation of said data processor, and the same error syndrome being provided by said error detection and correction apparatus on each of the two consecutive occasions of addressing which occasions are not determined by automatically rereading the same memory location after correction.

In a particular preferred embodiment of the invention, a relatively simple error detecting, correcting and logging implementation is provided for use in conjunction with one or more integrated circuit data processor memories. In order to efficienty make use of this simple implementation, it is constructed and arranged in accordance with the invention to take advantage of what experience and theoretical considerations indicate are the error occurrence patterns and resulting operational effects most likely to be expected from the memory. Accordingly, for reasons which will be explained hereinafter, the preferred implementation is primarily directed to detecting and correcting single bit memory read errors, while providing for logging the address and error syndrome pattern of only solid single bit memory read errors which are defined as those single bit errors which can not be corrected by either retrying or by restoring the correct word back into the memory and then retrying. Other types of single bit errors, such as transient errors are corrected, but not logged. The preferred implementation can thus be remarkably simpler than would otherwise be possible.

Further advantages are derived from the preferred embodiment by providing for the correction of single bit memory read errors at each memory module as well as in the memory control of the data processor. One advantage of such an arrangement is that each memory module is able to provide for restoring corrected values for all single bit errors back into its memory independently of the processor memory control and without burden thereto. Another advantage is that the processor memory control is able to directly receive uncorrected memory data and to independently provide for the detection and correction of all single bit errors as well as being able to provide for the detection and logging of solid single bit memory read errors without having to be concerned with the logging of other types of errors. Furthermore, the processor memory control does not have to wait for a memory module to provide error detection and correction data, nor does it have to provide for restoring a corrected word into the memory module which provided the data. Thus, the processor memory control may break off from a memory module as soon as it receives the uncorrected data therefrom, just as if none of these error related capabilities were being provided.

One way of carrying out the invention is described in detail below with reference to the drawings.

Brief description of the drawings

Fig. 1 is a block diagram generally illustrating a processor memory control system in which the present invention may be incorporated.

Fig. 2 is a block diagram illustrating how the preferred implementation is provided for each memory module in Fig. 1.

Fig. 3 is a block diagram illustrating how the preferred implementation is provided in the processor memory control of Fig. 1.

Description of a preferred embodiment

Like numerals and characters refer to like elements throughout the figures of the drawings.

For the preferred embodiment in which an integrated circuit memory is employed, the most common type of error which may be expected to occur is a single bit memory read error. Accordingly, to maintain simplicity, the preferred implementation of the present invention is primarily concerned with handling single bit memory read errors.

A single bit memory read error may be characterized as being either solid or transient. As pointed out previously, a solid single bit error is a single bit error in a word read out from memory having the characteristic that retrying the read operation or restoring the corrected word back into the memory and then retrying does not correct the error.

A transient single bit memory read error is one which can be corrected by retrying (one or more times), or by restoring and then retrying. A transient single bit memory read error which can be corrected by restoring and then retrying is usually referred to as an output error, while a transient single bit memory read error which requires restoring in order to obtain correction is usually referred to as a soft error.

It will be appreciated that transient errors are not easily diagnosed since they may not occur during diagnostic operations. Also, unlike a solid error, a transient error may not necessarily be the result of defective hardware but may be caused, for example, by noise or by alpha particle radiation. Also, because transient single bit errors may be expected to occur much more frequently than solid single bit errors, these transient errors would place a significant burden on an error logging implementation. In addition, attempts to log such transient errors could mask the more important solid single bit errors.

The preferred implementation of the present invention takes the above factors and characteristics into account in a manner which results in providing a remarkably simple and advantageous implementation for detecting and correcting single bit memory read errors, and for logging solid single bit errors which are the important one for hardware diagnosing purposes.

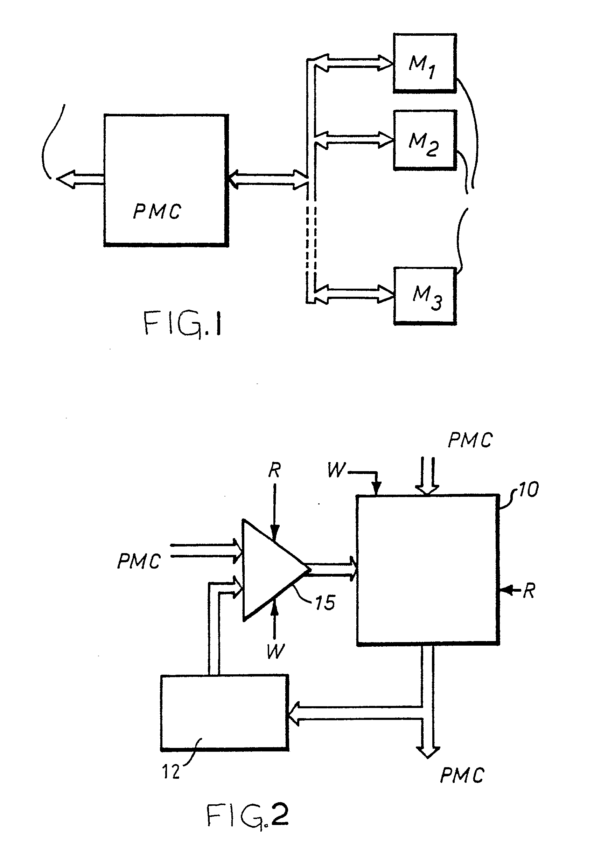

Referring now to Fig. 1, illustrated therein is a conventional arrangement of a processor memory control PMC providing communication between a plurality of memory modules $M_1$—$M_n$ and other processor portions of one or more processors. Typically, the processor memory control PMC selectively provides read and write control signals to the memory modules $M_1$—$M_n$ along with read and write memory addresses and write data, while providing for receiving read data accessed from the memory modules $M_1$—$M_n$.

Reference is next directed to Fig. 2 which illustrates how the memory portion of the preferred implementation is locally provided for use in conjunction with the memory 10 of a typical memory module of Fig. 1. It will be understood that data is read out of memory 10 from a selected address in response to a read signal R and a memory address provided by the processor memory control PMC (Fig. 1). This data read out from memory 10 is sent to PMC in the usual manner, and, in addition, is locally applied to a first single bit error detector and corrector 12 (which may be of conventional form). As is well known, data read out from a memory typically includes check bits which may be employed to detect and correct single bit errors occurring in data read from a storage device or memory. Further information with regard to error detection and correction devices can be found, for example, in the article by R. W. Hamming, "Error Detecting and Error Correcting Codes", Bell Systems Technical Journal, 29, 1950, pp. 147—160; in U.S. Patent No. 4,168,486, J. E. Legory, inventor; in U.S. Patent No. 4,052,698, H. U. Ragle, inventor;

and in U.S. Patent No. 4,174,537, Ke-Chiang Chu, et al, inventors.

The first single-bit error detector and corrector 12 in Fig. 2 detects the occurrence of a single bit memory read error and automatically restores corrected data provided by the first single bit error detector and corrector 12 back into the same memory address via a multiplexer 15. The multiplexer 15 preferably passes this corrected data to the write inputs of memory 10 in response to the current read signal R so as to automatically provide for restoration of corrected data whenever a single bit error is detected. The multiplexer 15 is also responsive to a write signal W provided by PMC (Fig. 1) so as to provide for writing data supplied by PMC into a selected memory address in the usual manner.

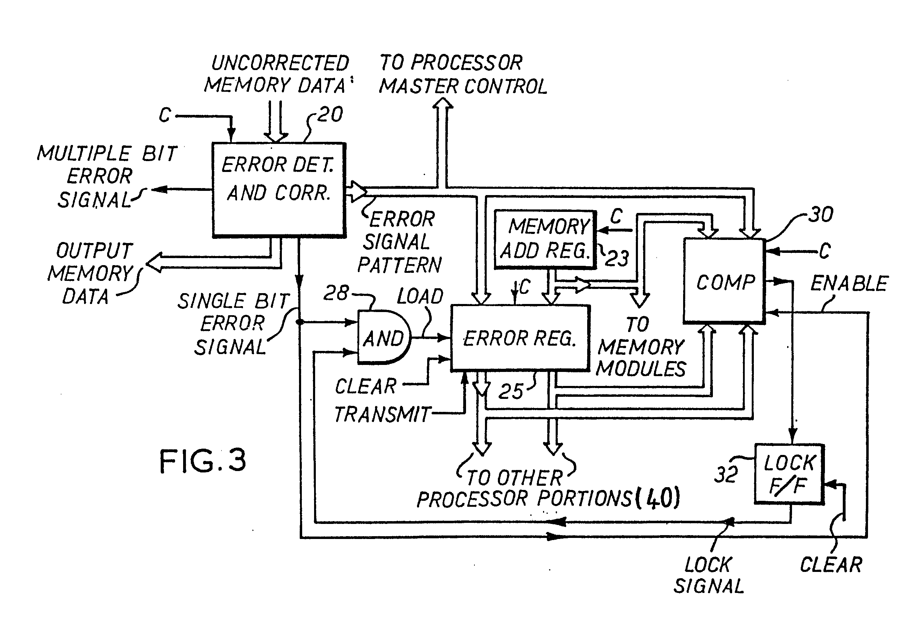

Referring next to Fig. 3, illustrated therein is the pertinent portion of the processor memory control PMC in Fig. 1 involved in the preferred implementation of the present invention.

It will be understood from Fig. 3 that the PMC portion shown includes its own second error detector and corrector 20. Memory read data from a memory module of Fig. 2 is applied to second error detector and corrector 20 which, in response thereto, operates in a conventional manner to provide the following four outputs:

(1) a single bit error signal indicating the presence of a single bit error in the applied memory data;

(2) a multiple bit error signal indicating the presence of a multiple error in the applied memory data;

(3) an error signal pattern (typically referred to as syndrome bits in the art) which indicates the type of error occurring and, if a single bit error, the particular bit of the applied memory data which is in error; and

(4) output memory read data which is one of the following:

   (a) the applied memory read data if no error is detected, or

   (b) the corrected memory read data if a single bit error is detected, or

   (c) the uncorrected memory read data if a multiple error is detected.

Before continuing with the description of Fig. 3, it is to be noted that, since the preferred implementation is primarily concerned with single bit memory read errors, a multiple read memory error is preferably handled by merely feeding the multiple error signal along with the corresponding error signal pattern provided by the second error detector and corrector 20 in Fig. 3 and the corresponding memory address contained in an address register 23 of Fig. 3 to the master control portion of the processor (not shown) for appropriate action such as, for example, halting processor operation or initiating an interrupt operation to handle the multiple error.

In the event of a single bit memory read error, the preferred implementation permits the processor to continue operations in the normal manner without interruption or halting of processor operations, as will become evident from the further description of Fig. 3 which now follows.

As shown, Fig. 3 includes (in addition to the second error detector and corrector 20 and memory address register 23) an error register 25, an AND gate 28 for controlling the loading of the error register 25 with an error signal pattern (from second error detector and corrector 20) and a corresponding memory address (from address register 23) each time a single bit error is detected, a comparator 30 for comparing a new signal error pattern and a corresponding memory address with those currently stored in the error register 25, and a lock flip-flop 32 which provides a lock signal that disenables AND gate 28 in response to the comparator 30 finding that a new error pattern and corresponding memory address are the same as these currently stored in the error register 25.

Having described the basic structure and arrangement of the memory module and PMC portions of the preferred implementation illustrated in Figs. 2 and 3, respectively, the operation thereof will next be considered. In this regard, it is assumed for the preferred implementation that each addressable word stored in a memory module contains sufficient check bits to permit at least single bit and multiple bit error detection and at least single bit error correction.

Considering first the operation provided for multiple bit errors, it should now be understood that these are readily handled by both memory and PMC portions of the preferred implementation. This will become evident by noting that the memory portion of the preferred implementation shown in Fig. 2, in effect, ignores multiple bit memory read errors, since first single bit error detector and corrector 12 provides for correcting and restoring only single bit memory read errors. This creates no problem or burden to the processor since uncorrected data read from a memory module is, in any event, sent directly to the processor memory control PMC (Fig. 2) just as if no correcting or restoring were taking place at the memory module.

Multiple bit memory read errors are also readily handled by the PMC portion of the preferred implementation shown in Fig. 3, since, as pointed out earlier herein, the second error detector and corrector 20 does not attempt to correct or log a multiple bit memory read error, but merely provides a multiple bit error signal along with the uncorrected memory data and the corresponding memory address and error signal pattern address for transmission to the processor master control for appropriate action, such as interruption or halting of processor operations.

Having explained how multiple bit memory read errors are readily handled, it will next be explained how single bit memory read errors are advantageously handled by the preferred implementation without burdening normal processor operations. From the description so far, it should be evident that the memory module portion of the preferred implementation shown in Fig. 2 handles a single bit memory read error independently of the processor by locally correcting and restoring the memory data back into the memory address from which it was read, while independently of such local correcting and restoring operations, transmitting the uncorrected memory data to the processor memory control PMC (Fig. 1). As indicated in the preferred implementation portion illustrated in Fig. 3, the uncorrected memory data is applied to the second error detector and corrector 20. If no error is present the error detector and corrector 20 merely outputs the input memory data without change for transmission to the processor portion which requires the memory data. If, on the other hand, a single bit memory read error is detected, the second error detector and corrector 20 outputs corrected memory data for transmission to the required processor portions, the only delay being that required for detection and correction operations which can be economically designed to occur at high speed, since a single second error detector and corrector can be shared by many memory modules.

The remaining portion of the preferred implementation illustrated in Fig. 3 is devoted to the selective logging of a particular type of single bit memory read error, namely, a solid single bit memory read error, which, as pointed out earlier herein, is of most importance with regard to diagnosing a hardware defect. It is to be understood that the operations involved in this selective logging of a solid single bit memory read error do not burden normal processor operations since they are able to be performed independently of other processor operations and concurrently therewith, as will become evident from the further description of Fig. 3 which will now be presented.

As indicated in Fig. 3, when a single bit memory read error is detected by the second error detector and corrector 20 during a clock period, it provides a single bit error signal to one input of AND gate 28. The other input of AND gate 28 receives the lock signal provided by the lock flip-flop 32 which is initially true as a result of a clear signal initially applied to the lock flip-flop 32.

Accordingly, when during a clock period a single bit error signal is produced by the second error detector and corrector 20 (as a result of detecting a single bit memory read error), a load signal is caused to be applied to the error register 25 during the same clock period along with the corresponding memory address (in memory address register 23) and the error signal pattern provided by the second error detector and corrector 20. Also during the same clock period, an error signal pattern is applied to the comparator 30 for comparison with the data currently stored in the error register 25 (which is initially set to all zeros by the clear signal). Thus, in response to the next occurring clock signal, the error signal pattern produced in the previous clock period will be stored in the error register 25 along with the corresponding memory address, and the comparator 30 will not change the initial setting of the lock flip-flop 32, since this produced error pattern will not be the same as the initial all zeros setting of the error register 25. The AND gate 28 will thereby remain enabled.

When a single bit error signal is next produced by the second error detector and corrector 20 during a clock period, the same operations as described above will again occur so long as the new error signal pattern and memory address are different from those stored in the error register 25 in response to the previously detected single bit error, thereby maintaining AND gate 28 enabled.

Assume now that a single bit memory read error is detected for which the error signal pattern produced by the second error detector and corrector 20 and the corresponding memory address provided by the memory address register 23 are the same as those currently stored in the error register 25, which occurs when two consecutive single bit errors are obtained for the same memory address. In such a case, the comparator now produces an output to the lock flip-flop 32 which changes the lock signal from true to false, thereby disenabling AND gate 28 to prevent the error register 25 from being changed. The processor may then respond to this false lock signal to provide a transmit signal to the error register 25 which causes the error signal pattern and memory address stored therein to be transmitted for logging in a suitable logging device 40 such as a memory or a display. A clear signal is then provided to permit logging operations to start over again.

It will be understood from the foregoing description of the logging operation of Fig. 3 that the particular single bit memory errors which are logged are those single bit memory read errors which are consecutively detected at the same memory address. In other words, if one or more single bit memory read errors for different memory addresses intervene between two detected single bit memory read errors corresponding to the same memory address, then there would be no logging, since the comparator 30 compares the signal pattern and corresponding memory address of each currently detected single bit memory read error with those obtained for the last occurring single bit memory error signal, since this is what is currently stored in the error register 25. It has been found that the use of such consecutively occurring single bit errors for logging purposes is an advantageously simple way of detecting and logging most solid single bit errors which, as pointed out previously, are of primary concern from a hardware diagnosis viewpoint. Thus transient errors which are of less significance are conveniently ignored and which are in any event automatically corrected locally at each memory module, since it has been found to be most unlikely that two transient memory read errors for the same memory address will occur consecutively.

## Claims

1. An apparatus (PMC, M1, M2, M3) for providing data storage for a data processor, said apparatus comprising: a plurality of memory locations (in M1, M2, M3, 10) each selectably operable in response to the receipt of a respective address to store or retrieve a data word consisting in retrievable data together with a plurality of error checking digits; error detection and correction apparatus (12, 20) operable to receive and monitor a retrieved data word from a selected memory location (in M1, M2, M3, 10), to detect and correct any single-bit errors in said retrieved data word, to present the corrected retrieved data word back to said selected memory location for re-storage therein, to generate an error syndrome indicative of the nature of any error in said retrieved data word, and to provide said retrievable data from said corrected retrieved data word for use by said data processor; an error register (25) operable to store said error syndrome and said address for the last of said plurality of memory locations (in M1, M2, M3, 10) whereat said error detection and correction apparatus (12, 20) has detected an error; a comparator (30) operable to monitor said syndrome and said address in said error register (25) and to provide output indicative of a hard error in the event of a match therebetween; and an error logging mechanism operable in response to the receipt of said output from said comparator (30) to log said error syndrome and said address in said error register (25), said apparatus being characterised in that the error logging mechanism is designed in such a way that only addresses and error syndromes of those memory locations (in M1, M2, M3, 10) are logged into a logging memory which were addressed twice consecutively for data retrieval and resulted in a detected error without there being an intervening detected error in any other memory location in the normal operation of said data processor, and the same error syndrome being provided by said error detection and correction apparatus (12, 20) on each of the two consecutive occasions of addressing which occasions are not determined by automatically rereading the same memory location after correction.

2. An apparatus according to Claim 1 wherein said plurality of memory locations (in M1, M2, M3, 10) are arranged in a plurality of memory modules (M1, M2, M3), and wherein said error detection and correction apparatus (12, 20) comprises a plurality of first error detectors and correctors (12), one in each of said plurality of memory modules (M1, M2, M3) and a second error detector and corrector (20) common to all of said plurality of memory modules (M1, M2, M3), each of said plurality of first error detectors and correctors (12) being instantly and automatically operable to perform said correction and presentation for re-storage of retrieved data words from memory locations (in 10) in its respective memory module (M1, M2, M3) and being operable to present to said second error detector and corrector (20) said retrieved data words without correction thereto, and said second error detector and corrector being operable to monitor said uncorrected retrieved data words and to respond thereto to perform said syndrome generation, and, if a single bit error is present in a retrieved data word, to perform said correction of the retrieved data word for said presentation to said data processor.

3. An apparatus according to Claim 2 wherein said second error detector and corrector (20), in the event of there being a multiple bit error in a retrieved data word, is operable to pass the uncorrected retrieved data word directly to said data processor, together with the associated syndrome, for said data processor to provide correction thereto.

4. An apparatus according to any of the preceding claims comprising a lock flip-flop (32) having an output settable to a first logical state in response to a clear signal providable by said error log subsequent to each logging of said address and said syndrome in said error register (25) and clocked to assume a second logical state in response to the receipt of said output of said comparator (30), said output of said flip-flop (32) being coupled to inhibit said error register (25) from storing any further addresses or syndromes when said output of said flip-flop (32) is in said second logical state for the first detected hard error in any consecutive group of detectable hard errors to be held in said error register (25) until said error log can attend thereto.

5. An apparatus according to Claims 2 or 3, or according to Claim 4 when dependent upon Claim 2, wherein said comparator (30) is operable to compare said addresses and said syndromes in said error register (25) to provide said output if and only if said second error detector and corrector (20) provides indication (ENABLE) to said comparator (30) that a single bit error is present in the uncorrected retrieved data word currently provided to said second error detector and corrector (20) to prevent spurious indication of a hard error.

## Revendications

1. Appareil (PMC, M1, M2, M3) pour assurer l'enregistrement de données pour un processeur de données, cet appareil comportant un ensemble d'emplacements de mémoire (dans M1, M2, M3, 10), chacun pouvant être mis en oeuvre sélectivement en réponse à la réception d'une adresse respective pour enregistrer ou récupérer un mot de données composé de données récupérables ainsi que d'un ensemble de chiffres de contrôle d'erreur, un appareil de détection et de correction d'erreur (12, 20) pour recevoir et contrôler un mot de données récupéré d'un emplacement de mémoire choisi (dans M1, M2, M3, 10) pour détecter et corriger toutes les erreurs simples de bit dans le mot de données récupéré, pour présenter de nouveau le mot de données, récupéré et corrigé à l'emplacement de mémoire, choisi, pour l'y enregistrer de nouveau, pour générer un syndrome d'erreur indiquant la nature de toute erreur dans le mot de données récupéré, et pour fournir cette donnée récupérée du mot de données récupéré et corrigé pour être utilisée par le processeur de données, un registre d'erreur (25) enregistrant le syndrome d'erreur et l'adresse du dernier emplacement de mémoire (dans M1, M2, M3, 10), l'appareil de détection et de correction d'erreur (12, 25) ayant détecté une erreur, un comparateur contrôlant le syndrome et l'adresse du registre d'erreur (25) et donnant un signal de sortie indiquant une erreur de circuit en cas de coïncidence, et un mécanisme d'enregistrement d'erreur mis en oeuvre en réponse à la réception du signal de sortie du comparateur (30) pour enregistrer le syndrome d'erreur et l'adresse dans le registre d'erreur (25), cet appareil étant caractérisé en ce que le mécanisme d'enregistrement d'erreur est tel que seulement les adresses et les syndromes d'erreur de ceux des emplacements de mémoire (dans M1, M2, M3, 10) qui ont été adressés deux fois successivement en récupération de données et correspondant à une détection d'erreur soient enregistrés dans une mémoire d'enregistrement sans qu'il n'y ait eu de détection d'erreur intermédiaire dans tout autre emplacement de mémoire au cours du fonctionnement normal du processeur de données et le même syndrome d'erreur est fourni par l'appareil de détection et de correction d'erreur (12, 20) pour chaque occasion successive d'adressage, occasion qui n'est pas déterminée par la relecture automatique du même emplacement de mémoire après correction.

2. Appareil selon la revendication 1, caractérisé en ce que l'ensemble des emplacements de mémoire (dans M1, M2, M3, 10) est réparti entre plusieurs modules de mémoire (M1, M2, M3) et un appareil de détection et correction d'erreur (12, 20) se compose d'un ensemble-de premiers détecteurs et correcteurs d'erreur (12) un pour chacun des ensembles de modules de mémoire (M1, M2, M3) et un second détecteur et correcteur d'erreur (20) commun à tout l'ensemble des modules de mémoire (M1, M2, M3), chacun des ensembles des premiers détecteurs et correcteurs d'erreur (12) étant mis en oeuvre instantanément et automatiquement pour effectuer la correction et la présentation en vue du réenregistrement des mots de données, récupérés des emplacements de mémoire (dans 10) dans son module de mémoire respectif (M1, M2, M3) et pour présenter au second détecteur et correcteur d'erreur (20), les mots de données récupérés, non corrigés, et le second détecteur et correcteur d'erreur contrôlant les mots de données, récupérés, non corrigés et répondant à cet envoi pour générer le syndrome et si une erreur simple de bit est présente dans le mot de données, récupéré, pour corriger le mot de données récupéré et le présenter au processeur de données.

3. Appareil selon la revendication 2, caractérisé en ce que s'il y a une erreur multiple de bit dans un mot de données récupéré, le second détecteur et correcteur d'erreur (20) fait passer le mot de données récupéré, non corrigé, directement au processeur de données en même temps que le syndrome correspondant pour que le processeur de données en assure la correction.

4. Appareil selon l'une quelconque des revendications précédentes, caractérisé en ce qu'il comporte un flip-flop de verrouillage (32) ayant une sortie susceptible d'être mise à un premier état logique en réponse à un signal d'effacement que peut fournir l'enregistrement d'erreur à la suite de chaque enregistrement de l'adresse et du syndrome dans le registre d'erreur (25) et peut être commandée en cadence pour passer à un second état logique en réponse à la réception du signal de sortie du comparateur (30), le signal de sortie du flip-flop (32) étant couplé de façon à interdire au registre d'erreur (25) d'enregistrer toutes autres adresses ou syndromes qui, lorsque la sortie du flip-flop (32) est dans son second état logique pour la première erreur de circuit détectée dans tout groupe successif d'erreurs de circuit susceptibles d'être détectées, pour être conservés dans le registre d'erreur (25) jusqu'à l'enregistrement de l'erreur.

5. Appareil selon les revendications 2 ou 3, ou selon la revendication 4 en dépendance avec la revendication 2, caractérisé en ce que le comparateur (30) compare les adresses et les syndromes du registre d'erreur (25) pour fournir un signal de sortie si, et seulement si, le second détecteur et correcteur d'erreur (20) donne une indication (AUTORISATION) au comparateur (30) qu'une erreur simple de bit est présente dans le mot de données récupéré, non corrigé, fourni de façon courante au second détecteur et correcteur d'erreur (20) pour éviter l'indication erratique d'une erreur de circuit.

**Patentansprüche**

1. Vorrichtung (PMC, M1, M2, M3) zum Speichern von Daten für einen Datenprozessor mit mehreren Speicherplätzen (in M1, M2, M3, 10), die jeweils auf den Empfang einer entsprechenden Adresse ein Datenwort, das aus rückholbaren Daten und mehreren Fehlerprüfbits besteht, speichern oder zurückholen; einer Erfassungs- und Korrekturvorrichtung (12, 20) die ein von einem ausgewählten Speicherplatz (in M1, M2, M3, 10) zurückgeholtes Datenwort empfängt und überwacht, um sämtliche Ein-Bit-Fehler in dem zurückgeholten Datenwort zu erfassen und zu korrigieren, das korrigierte, zurückgeholte Datenwort an den ausgewählten Speicherplatz zur erneuten Speicherung zurückzuübertragen, ein Fehlersyndrom zu erzeugen, das die Art jedes in dem zurückgeholten Datenwort enthaltenen Fehlers angibt und die zurückholbaren Daten aus dem korrigierten, zurückgeholten Datenwort für den Gebrauch durch den Datenprozessor abgibt, ein Fehlerregister (25), das das Fehlersyndrom und die Adresse des letzten der mehreren Speicherplätze (in M1, M2, M3, 10) speichert, an welchem die Fehlererfassungs- und Korrekturvorrichtung (12, 20) einen Fehler festgestellt hat; einen Komparator (30), der das Syndrom und die Adresse im Fehlerregister (25) überwacht und ein Ausgangssignal abgibt, das einen beständigen Fehler im Falle einer Übereinstimmung anzeigt; und einen Fehlereintragungsmechanismus, der auf dem Empfang des Ausgangssignals von dem Komparator (30) des Fehlersyndrom und die Adresse in das Fehlerregister (25) einträgt, dadurch gekennzeichnet, daß der Fehlereintragungsmechanismus so aufgebaut ist, daß nur Adressen und Fehlersyndrome solcher Speicherplätze (in M1, M2, M3, 10) in einen Eintragungsspeicher eingetragen werden, die zweimal aufeinanderfolgend zum Datenrückholen adressiert wurden und daraus resultierend ein Fehler festgestellt wurde, ohne daß dazwischen ein Fehler in einem beliebigen anderen Speicherplatz bei der normalen Operation des Datenprozessors erfaßt wurde und daß dasselbe Fehlersyndrom von der Fehlerfassungs- und Korrekturvorrichtung (12, 20) bei jeder der beiden aufeinanderfolgenden Gelegenheiten zur Adressierung abgegeben wird, wobei die Gelegenheiten nicht durch automatisches Wiederlesen desselben Speicherplatzes nach der Korrektur bestimmt werden.

2. Vorrichtung nach Anspruch 1, dadurch gekennzeichnet, daß die mehreren Speicherplätze (in M1, M2, M3, 10) in mehreren Speichermodulen (M1, M2, M3) angeordnet sind und daß die Fehlererfassungs- und Korrekturvorrichtung (12, 20) mehrere erste Fehlerfassungs- und Korrektureinrichtungen (12), von denen jeweils eine in jedem der mehreren Speichermodule (M1, M2, M3) angeordnet ist, und eine für alle der mehreren Speichermodule (M1, M2, M3) gemeinsame zweite Fehlererfassungs- und Korrektureinrichtung (20) enthält, wobei jede der mehreren ersten Fehlererfassungs- und Korrektureinrichtungen (12) sofort und automatisch die Korrektur und Übergabe zur erneuten Speicherung der aus den Speicherplätzen (in 10) zurückgeholten Datenworte in sein entsprechendes Speichermodul (M1, M2, M3) durchführt und der zweiten Fehlererfassungs- und Korrektureinrichtung (20) zurückgeholte Datenwörter ohne eine Korrektur anbietet und wobei die zweite Fehlererfassungs- und Korrektureinrichtung die unkorrigierten, zurückgeholten Datenwörter überwacht und mit einer Durchführung der Syndromerzeugung beantwortet und für den Fall eines Ein-Bit-Fehlers in einem zurückgeholten Datenwort die Korrektur des zurückgeholten Datenwortes zur Übergabe an den Datenprozessor durchführt.

3. Vorrichtung nach Anspruch 2, dadurch gekennzeichnet, daß die zweite Fehlererfassungs- und Korrektureinrichtung (20) für den Fall eines Mehr-Bit-Fehlers in einem zurückgeholten Datenwort das unkorrigierte, zurückgeholte Datenwort unmittelbar zusammen mit dem zugehörigen Syndrom an den Datenprozessor weiterleitet, damit der Datenprozessor die Korrektur durchführt.

4. Vorrichtung nach einem der vorstehenden Ansprüche, dadurch gekennzeichnet, daß ein Verriegelungs-Flip-Flop (32) einen Ausgang aufweist, der einen ersten logischen Zustand auf ein Löschsignal einnimmt, das durch die Fehlereinrichtung nach jeder Eintragung der Adresse und des Syndroms in das Fehlerregister (25) ausgelöst wird und das getaktet wird, um einen zweiten logischen Zustand auf den Empfang des Ausgangssignales des Komparators (30) einzunehmen, daß das Ausgangssignal des Flip-Flops (32) das Fehlerregister (25) daran hindert, jedwede weitere Adressen oder Syndrome zu speichern wenn der Ausgang des Flip-Flops (32) sich im zweiten logischen Zustand für den ersten erfaßten, beständigen Fehler in einer Folgegruppe erfaßbarer beständiger Fehler befindet, die in dem Fehlerregister (25) gehalten werden bis die Fehlereintragung erfolgen kann.

5. Vorrichtung nach Anspruch 2 oder 3 nach Anspruch 4 in Verbindung mit Anspruch 2, dadurch gekennzeichnet, daß der Komparator (30) die Adressen und Syndrome in dem Fehlerregister (25) vergleicht und das Ausgangssignal dann und nur dann abgibt, wenn die zweite Fehlererfassungs- und Korrektureinrichtung (20) eine Anzeige (ENABLE) an den Komparator (30) abgibt, daß ein Ein-Bit-Fehler bei dem unkorrigierten, zurückgeholten Datenwort vorliegt, das gegenwärtig an die zweite Fehlererfassungs- und Korrektureinrichtung abgegeben wird, um eine Falschanzeige eines beständigen Fehlers zu verhindern.

FIG.1

FIG.2

FIG. 3